# EUROPÄISCHE PATENTSCHRIFT

(11) **EP 3 407 045 B1**
(45) Veröffentlichungstag und Bekanntmachung des Hinweises auf die Patenterteilung: **11.03.2020**
(21) Anmeldenummer: 18173187.8
(22) Anmeldetag: 18.05.2018
(51) Int. Cl.: G01L 3/10

(54) **STATORBEFESTIGUNG IM DREHMOMENTSENSOR**
STATOR MOUNTING IN TORQUE SENSOR
FIXATION DE STATOR DANS LE CAPTEUR DE COUPLE DE ROTATION

(30) Priorität: 23.05.2017 DE 102017111305; 14.08.2017 DE 102017118456
(43) Veröffentlichungstag der Anmeldung: 28.11.2018
(73) Patentinhaber: Bourns, Inc., Riverside, CA 92507 (US)
(72) Erfinder: Berner, Sebastian, 81371 München (DE); Cano, Miguel, 81541 München (DE); Schmotz, Hans, 85653 Aying (DE)
(74) Vertreter: von Bülow & Tamada

(56) Entgegenhaltungen:
- DE-A1-102012 024 383

## Beschreibung

Die vorliegende Erfindung betrifft einen Stator zum Führen eines in einer Umgangsrichtung um eine Rotationsachse ortsabhängigen Magnetfeldes. Aus der EP 1 870 684 B1 ist ein Stator zum Führen eines in einer Umgangsrichtung um eine Rotationsachse ortsabhängigen Magnetfeldes, bekannt umfassend einen um die Rotationsachse umlaufenden ersten Statorring, und einen um die Rotationsachse umlaufenden zweiten Statorring, der konzentrisch zum ersten Statorring angeordnet ist, wobei der erste und zweite Statorring entsprechend in einer ersten axialen Ebene und in einer von der ersten axialen Ebene beabstandeten zweiten axialen Ebene liegend angeordnet und um die Rotationsachse umlaufend ausgebildet sind, und wobei vom ersten Statorring umfänglich um die Rotationsachse angeordnete und mit ersten Klauenlücken voneinander beabstandete erste Klauen axial in Richtung des zweiten Statorrings abragen, die in zweite Klauenlücken zwischen zweiten Klauen eingreifen, welche vom zweiten Statorring umfänglich um die Rotationsachse angeordnet und mit den zweiten Klauenlücken voneinander beabstandet axial in Richtung des ersten Statorrings abragen, wobei jede der ersten und zweiten Klauen auf ihrer dem Statorring axial gegenüberliegenden Seite einen Klauenkopf umfasst.

Aus der DE 10 2012 024 383 A1 ist ein Stator gemäß dem Obergriff des geltenden Anspruchs 1 bekannt.

Aufgabe der Erfindung ist, den Stator zu verbessern.

Die Aufgabe wird durch die Merkmale des unabhängigen Anspruchs gelöst. Bevorzugte Weiterbildungen sind Gegenstand der abhängigen Ansprüche.

Erfindungsgemäß ist in einem Stator gemäß dem Oberbegriff des geltenden Anspruchs 1 in wenigstens einer der ersten Klauenlücken und in einer der zweiten Klauenlücken gegenüberliegend zum entsprechenden in die jeweilige erste und zweite Klauenlücke eingreifenden Klauenkopf ein Statorbefestigungselement zum Befestigen des ersten und zweiten Statorrings an einem Träger angeordnet.

Dem angegebenen Stator liegt die Überlegung zugrunde, dass der eingangs genannte Stator Befestigungselemente in Form von Durchgangsbohrungen am Statorring besitzt. Im eingangs genannten Stator ist des daher unmöglich Kollektorbleche in diesem Bereich Kollektorbleche anzuordnen, die einen magnetischen Fluss durch die Statorringe zu einem Messaufnehmer leiten. Aus diesem Grunde sind im Sensor mit dem eingangs genannten Stator Flusskollektoren umfänglich an der radialen Außenseite der Statoren angeordnet. Diese Anordnung ist allerdings aus Sicht elektromagnetischer Störeinflüsse nicht nicht optimal, weil ein Magnetfeld aus einer externen Störmagnetquelle die Flusskollektoren ungehindert erreichen und ein Störmagnetfeld eintragen kann.

Würden die Statorringe als Abschirmbleche benutzt und die Flusskollektoren axial zwischen den Statorringen angeordnet, so könnten äußere magnetische Störeinflusse zumindest gedämpft werden. Dies ist allerdings mit dem eingangs genannten Stator nicht möglich, weil das Befestigungselement den Stator stört. Aus diesem Grund sind die Befestigungselemente des angegebenen Stators in den Klauenlücken an der radialen Innenseite der Statorringe angeordnet. Auf diese Weise können die Flusskollektoren axial zwischen den Statorringen störungsfrei angeordnet werden.

Erfindungsgemäß ist das Statorbefestigungselement ein in Umfangsrichtung wirkendes Statorformschlusselement, in welches axial ein Träger angeordnetes Tägerformschlusselement eingreifen kann. Auf diese Weise lässt sich der Stator in einfacher Weise auf den Träger aufsetzen und montieren.

Erfindungsgemäß ist das Statorformschlusselement eine radial zur Rotationsachse hin gerichtete Gabel. Diese ist auf einer radialen Innenseite des Stators geöffnet, so dass kein magnetisch leitfähiges Material in einen Erregermagneten des Sensors mit dem Stator eingreifen und ungewünschte magnetische Kurzschlüsse hervorrufen kann.

In einer weiteren Weiterbildung des angegebenen Stators ist die Gabel einstückig mit dem jeweiligen Statorring ausgebildet. Auf diese Weise lässt sich der angegebene Stator in einfacher Weise durch effiziente Herstellungsverfahren, wie Urformen oder Trennen herstellen, ohne dass nachträglich die Befestigungselemente am Statorring befestigt werden müssten.

In einer anderen Weiterbildung des angegebenen Stators ist das Statorbefestigungselement in einer radialen Aussparung zwischen zwei benachbarten Klauen angeordnet.Auf diese Weise kann das Befestigungselement radial auf einer Höhe mit den Klauen angeordnet werden, so dass zur Befestigung des Stators am Träger einerseits der gesamte Bauraum ausgenutzt wird und sich die Klauen radial nahe an den Erregermagneten führen lassen, andererseits werden die oben erwähnten Kurzschlüsse wirksam vermieden, weil die Statorbefestigungselemente radial nicht über den Klauen überstehen.

In einer besonderen Weiterbildung des angegebenen Stators ist das Statorbefestigungselement in der radialen Aussparung zwischen den zwei benachbarten Klauen mittig angeordnet. Auf diese Weise wird ist das Statorbefestigungselement in Umfangsrichtung gesehen achsensymmetrisch in der Aussparung aufgenommen und wird unabhängig von einer Drehrichtung, des Sensors mit dem Statorelement stets gleich belastet.

In einer noch bevorzugten Weiterbildung des angegebenen Stators ist jeder Statorring ein Stanzteil, an dem den Klauen axial abgebogen sind. Auf diese Weise lassen sich die einzelnen Statorringe in Form eines Blechpacketes herstellen, von dem die einzelnen Klauen dann nur noch beispielsweise mittels Tiefziehen abgebogen werden brauchen.

Gemäß einem weiteren Aspekt der Erfindung umfasst ein Sensor zur Erfassung eines Drehmoments zwischen einer ersten Welle und einer zweiten Welle, die über einen Torsionsstab miteinander verbundenen sind einen zylinderförmigen Träger mit zwei gegenüberliegenden Stirnseiten, auf denen je Trägerbefestigungselement angeordnet ist, einen mit der ersten Welle ortsfest verbindbaren zuvor angegebenen Stator, dessen Statorringe auf die Stirnseiten des Trägers aufgesetzt und über die entsprechenden Trägerbefestigungselemente und Statorbefestigungselemente am Träger befestigt sind, einen mit der zweiten Welle ortsfest verbindbaren und koaxial zur Rotationsachse angeordneten Magnetfeldgeber zum Erzeugen und Einspeisen des Magnetfeldes in den Stator, und einen Magnetfeldfühler zum Erfassen eines den Stator passierenden Magnetfeldes aus dem Magnetfeldgeber.

In einer Weiterbildung des angegebenen Stators sind die Trägerbefestigungselemente Zapfen, die mit den Statorbefestigungselementen heißverstemmt sind. Durch die Heißverstemmung lassen sich der Träger und der Stator in einfacher Weise miteinander verbinden.

In einer anderen Weiterbildung sind auf eine der Stirnseiten des Trägers Verbindungssäulen aufgesetzt, die auf dem Träger ein Anbindeelement für die erste Welle tragen. Diese Säulen sind stabil genug um eine ausreichende mechanische Festigkeit beim Drehen des Sensors zu bieten ermöglichen allerdings gleichzeitig, dass die beiden Wellen zur Aufnahme der Sensorkomponenten axial unterbrochen sind.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 schematisch eine perspektivische Ansicht eines Fahrzeuges mit einem Lenksystem,
Fig. 2a schematisch eine Explosionsansicht eines Drehmomentensensors für das Lenksystem aus Fig. 1,
Fig. 2b schematisch eine perspektivische Schnittansicht eines Drehmomentensensors aus Fig. 2a,
Fig. 3 schematisch eine perspektivische Ansicht eines Stators aus dem Drehmomentsensor der Figs. 2a und 2b,

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

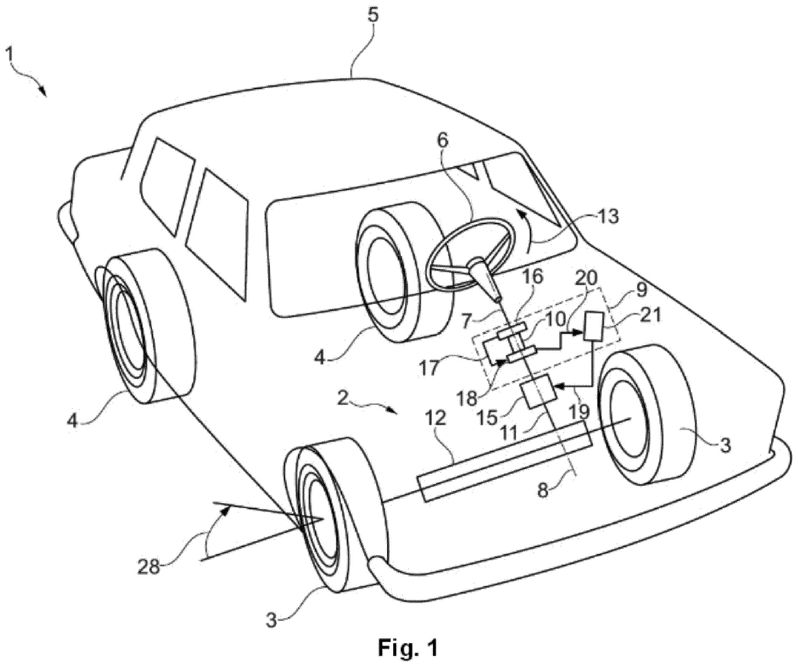

Es wird auf Fig. 1 Bezug genommen, die schematisch eine perspektivische Ansicht eines Fahrzeuges 1 mit einem Lenksystem 2 zeigt.

Das Fahrzeug 1 umfasst im vorliegenden Ausführungsbeispiel ein auf zwei Vorderrädern 3 und auf zwei Hinterrädern 4 getragenes Chassis 5. Die Vorderräder 3 können dabei über das Lenksystem 4 eingeschlagen werden, damit mit dem Fahrzeug 1 eine Kurve gefahren werden kann.

Das Lenksystem 2 umfasst ein Lenkrad 6, das auf eine erste Lenkwelle 7 aufgesetzt ist, die wiederum um eine Rotationsachse 8 drehbar angeordnet ist. Die erste Lenkwelle 7 ist in einen Drehmomentsensor 9 geführt und dort in nicht weiter zu sehender Weise an ein Torsionselement 10 angeschlossen. An dieses Torsionselement 10 ist auf der der ersten Lenkwelle 7 gegenüberliegenden Seite auf der Rotationsachse 8 eine zweite Lenkwelle 11 angeschlossen und mit einem Lenkgetriebe 12 verbunden. Wird das Lenkrad 6 mit einem Lenkmoment 13 gedreht, wird das Lenkmoment entsprechend an das Lenkgetriebe 12 übertragen, welches als Reaktion darauf die Vorderräder 3 für die Kurvenfahrt mit einem Radeinschlag 14 einschlägt.

Der Lenkvorgang kann mit einem Hilfsmotor 15 unterstützt werden, der die zweite Lenkwelle 11 hilfsweise mitdrehen kann. Hierzu wird das Lenkmoment 13 mit dem Drehmomentsensor 9 erfasst. Der Hilfsmotor 15 dreht dann unter anderem in Abhängigkeit des erfassten Lenkmomentes 13 die zweite Lenkwelle 11.

Zur Erfassung des Lenkmomentes 13 umfasst der Drehmomentsensor 9 ein mit der ersten Lenkwelle 7 verbundenes Magnetgeberelement 16, welches ein magnetisches Feld 17 erregt. Der Lenkmomentsensor 13 umfasst ferner ein mit der zweiten Lenkwelle 11 verbundenes Magnetfilter 18, welches das magnetische Feld 17 aus dem Magnetgeberelement 16 in Abhängigkeit einer relativen Winkelstellung 19 der ersten Lenkwelle 7 und damit des Magnetgeberelementes 16 zur zweiten Lenkwelle 11 und damit zum Magnetfilter 18 dämpft und das gedämpfte Magnetfeld 20 an wenigstens einen Magnetfeldfühler 21 weiterleitet. Dieser erfasst das gedämpfte Magnetfeld 20 und gibt basierend darauf die Winkelstellung 19 zwischen den beiden Wellen 7, 11 oder ein davon abhängiges Signal aus. Diese Winkelstellung 19 oder das davon abhängige Signal ist unmittelbar vom zu erfassenden Lenkmoment 13 abhängig, so dass der Hilfsmotor 15 diese Information unmittelbar weiterverarbeiten kann.

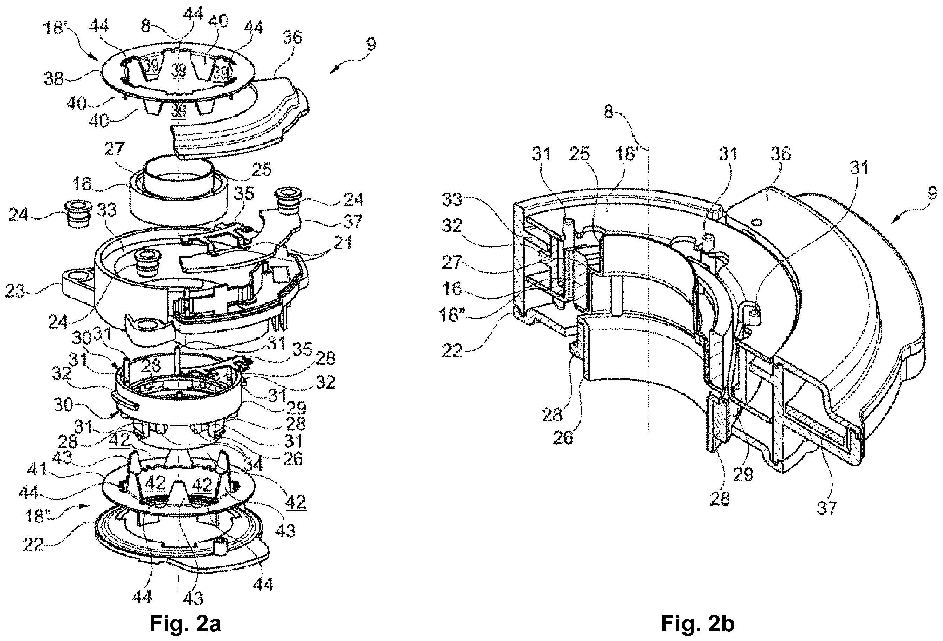

Im Folgenden wird das Magnetfilter 18 auch als Stator 18 bezeichnet, weil es für den nachstehend anhand der Fig. 2a und 2b zu beschreibenden Drehmomentsensors 9 ein gebräuchlicherer Begriff ist.

Der Drehmomentsensor 9 umfasst um die Rotationsachse 8 herum ein über einen Gehäusedeckel 22 verschließbares Gehäuse 23, welches über Schutzelemente 24 an dem Fahrzeug 1 verschraubt werden kann. In dem Gehäuse 23 sind, an der Rotationsachse 8 ausgerichtet, eine erste Lagerbuchse 25 zur kraftschlüssigen Aufnahme der ersten Lenkwelle 7 und eine zweite Lagerbuchse 26 zur kraftschlüssigen Aufnahme der zweiten Lenkwelle 11 aufgenommen.

Dabei ist die erste Lagerbuchse 25 über ein Verbindungsmittel 27, wie beispielsweise ein Kleber, mit dem Magnetfelgeberelement 16 fest verbunden, so dass das Magnetfeldgeberelement 16 fest an der ersten Lenkwelle 7 gehalten wird, wenn diese in die erste Lagerbuchse 25 eingepresst ist.

Die zweite Lagerbuchse 26 ist fest an Klemmelementen 28 eines Koppelstücks 29, auch Träger 29 genannt, gehalten, welches den Stator 18 in einer noch zu beschreibenden Weise fest an die zweite Lagerbuchse 26 anbindet. Hierzu besitzt das Koppelstück 29 im Wesentlichen eine Rohrform. Von den beiden Stirnseiten 30 des Koppelstückes 29 ragen axial Trägerbefestigungselemente in Form von Zapfen 31 ab, von denen in Fig. 2a der Übersichtlichkeit halber nicht alle mit einem Bezugszeichen versehen sind. An diesen Zapfen 31 ist der Stator 18 drehfest am Koppelstück 29 gehalten, worauf an späterer Stelle näher eingegangen wird. Ferner weist das Koppelstück 29 matelseitig erste axiale Stützelemente 32 auf, an denen sich das Koppelstück 29 axial an einem Stützring 33 des Gehäuses 23 lagern lässt. Zur axialen Lagerung des Koppelstücks am Gehäusedeckel 22 sind zweite axiale Stützelemente 34 in Form von Füßchen an der zum Gehäusedeckel 22 gerichteten Stirnseite 30 des Koppelstücks 29 ausgebildet.

Wenn im Betrieb des Drehmomentsensors 9 die erste Lenkwelle 7 gedreht und die Drehung über Torsionselement 10 auf die zweite Lenkwelle 11 übertragen wird, drehen sich im Gehäuse 23 das Koppelstück 29 geführt auf dem Stützring 33 und dem Gehäusedeckel 22 gemeinsam mit dem Stator 18 und dem Magnetfelgeberelement 16. Bedingt durch Trägheit der zweiten Lenkwelle 11 kann sich beim Drehen der ersten Lenkwelle 7 diese gegenüber der zweiten Lenkwelle 11 verdrehen. In der Folge verdrehen sich auch das Magnetfelgeberelement 16 und der Stator 18 gegeneinander. Der Drehmomentensensor 9 funktioniert grundsätzlich so, dass er mit dem Stator 18 das Magnetfeld 17 aus dem Magnetfeldgeberelement 16 in Abhängigkeit dieser Verdrehung aufnimmt, und an zwei Magnetfeldfühler 21 weiterleitet, die über Flußleitelemente 35 an den Stator 18 angeschlossen sind. Die Flußleitelemente 35 sind notwendig, weil die Magnetfeldfühler 21 auf einer mit einem Deckel 36 überdeckbaren Leiterplatte 37 ortsfest im Gehäuse 23 angeordnet sind und sich im Lenkvorgang nicht mitdrehen sollen. Daher stehen die Flußleitelemente 35 in Reibkontakt mit dem sich drehenden Stator 18, nehmen so das vom Stator 18 gedämpfte Magnetfeld 20 auf und leiten es an die ortsfesten Magnetfühler 21 weiter.

Das Magnetfeldgeberelement 16 ist aus nicht weiter gezeigten Nord- und Südpolen ausgebildet, die abwechselnd in Umfangsrichtung um die Rotationsachse 8 angeordnet sind. Der Stator 18 besteht aus zwei Statorteilen 18' und 18". Das erste Statorteil 18' besitzt einen Statorring 38, der sich eben in einer Axialebene zur Rotationsachse 8 erstreckt. An einer radialen Innenseite des ersten Statorrings 38 erstrecken Umfangsrichtung um die Rotationsachse 8 mit ersten Klauenlücken 39 voneinander beabstandet und axial vom ersten Statorring 38 weg erste Klauen 40. Von den ersten ersten Klauenlücken 39 und den ersten Klauen 40 sind in Fig. 2a der Übersichtlichkeit halber nicht alle mit einem eigenen Bezugszeichen versehen. Das zweite Statorteil 18" besitzt einen Statorring 41, der sich eben in einer Axialebene zur Rotationsachse 8 erstreckt, die verschieden ist von der Axialebene, in der sich der erste Statorring 38. An einer radialen Innenseite des zweiten Statorrings 41 erstrecken Umfangsrichtung um die Rotationsachse 8 mit zweiten Klauenlücken 42 voneinander beabstandet und axial vom zweiten Statorring 41 weg zweite Klauen 43. Von den zweiten zweiten Klauenlücken 42 und den zweiten Klauen 43 sind in Fig. 2a der Übersichtlichkeit halber nicht alle mit einem eigenen Bezugszeichen versehen. Jede Klaue 40, 43 besitzt an ihrer dem jeweiligen Statorring 18', 18" gegenüberliegenden Seite einen Klauenkopf 45. Von diesen Klauenköpfen sind in den Figuren der Übersichtlichkeit halber nicht alle mit einem Bezugszeichen versehen.

Um zusammengesetzten Zustand des Drehmomentensensors sind die beiden Statorteile 18', 18" zueinander an der Rotationsachse 8 ausgerichtet, so dass die ersten Klauen 40 axial in die zweiten Klauenlücken 42 eingreifen, und die zweiten Klauen 43 axial in die ersten Klauenlücken 39 eingreifen. Dabei sind beide Statorteile 18', 18" über Statorbefestigungselemente in Form von Gabelelemente 44 an den Zapfen 31 des Koppelstückes 29 gehalten, so dass sie sich nicht in Umfangsrichtung um die Rotationsachse 8 zueinander verdrehen können. Von den Gabelelementen 44 sind in Fig. 2a der Übersichtlichkeit halber nicht alle mit einem eigenen Bezugszeichen versehen.

In einer Nullposition, wenn die erste Lenkwelle 7 gegenüber der zweiten Lenkwelle 11 nicht tordiert ist, stehen der radialen Innenseite jeder ersten Klaue 40 des ersten Statorteils 18' eine erste der beiden Polarten des Magnetfeldgeberelement 16 gegenüber - beispielsweise Nordpole. Demgegenüber stehen in der Nullposition der radialen Innenseite jeder zweiten Klaue 43 des zweiten Statorteils 18" die andere der beiden Polarten des Magnetfeldgeberelement 16 gegenüber - beispielsweise Südpole. Das Magnetfeld 17 des Magnetfeldgeberelements 16 tritt in der Nullposition damit nahezu vollständig in die ersten Klauen 40 am ersten Statorteil 18' ein und wird als kaum gedämpftes Magnetfeld 20 über die Flussleitelemente 35 durch die Magnetfeldfühler 21 geleitet.

Werden die beiden Lenkwellen 7, 11 allerdings relativ zueinander verdreht, so werden auch die Pole des Magnetfeldgeberelements 16 gegenüber den Klauen 40, 43 in Umfangsrichtung versetzt, so dass jede Klaue 40, 43 nun sowohl von Nord- als auch von Südpolen des Magnetfeldgeberelements 16 radial überdeckt wird. In diesem Zustand wird ein Teil des Magnetfeldes 17 des Magnetfeldgeberelements 16 an den Klauen 40, 43 kurzgeschlossen, so dass an den Magnetfühlern 21 ein deutlich gedämpftes Magnetfeld 20 ankommt. Je stärker die relative Verdrehung der beiden Lenkwellen 7, 11 ist desto mehr des Magnetfeldes 17 des Magnetfeldgeberelements 16 wird an den Klauen 40, 43 kurzgeschlossen. Daher ist das gedämpfte Magnetfeld 20 unmittelbar von der Verdrehung der beiden Lenkwellen 7, 11 zueinander abhängig.

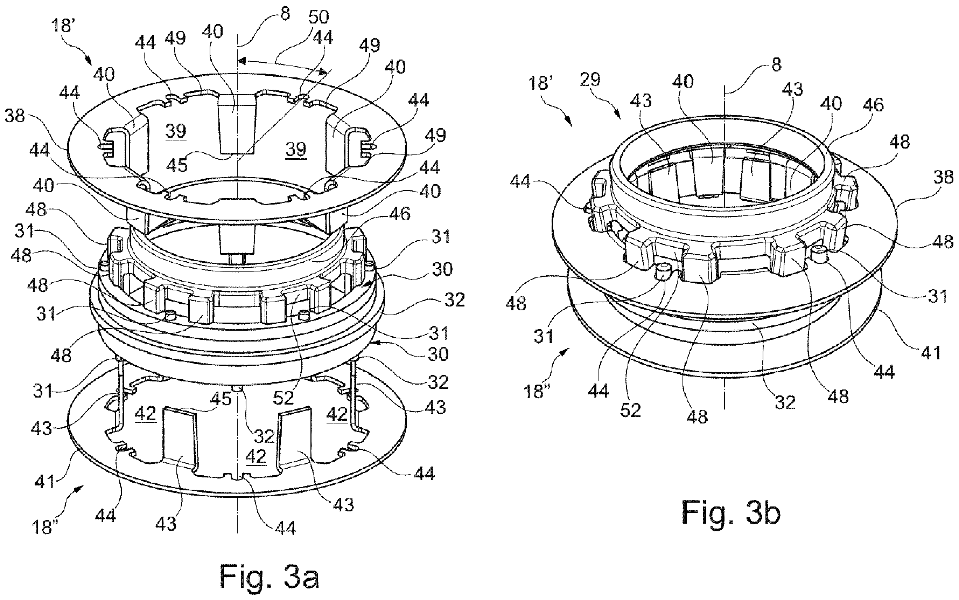

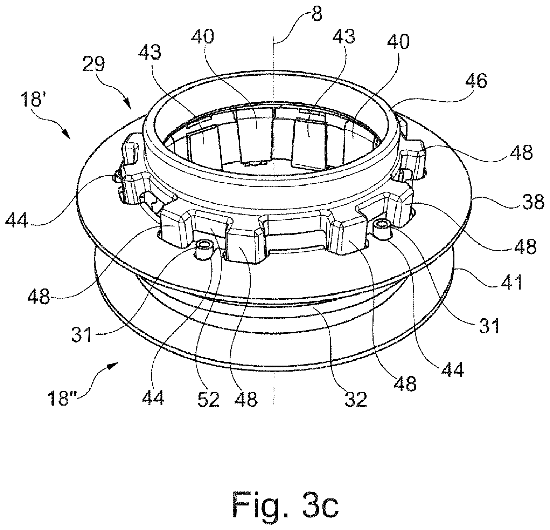

Nachstehend soll anhand der Fig. 3a bis 3c auf die Befestigung des Stators 18 am Koppelstück 29 detaillierter eingegangen werden.

Zur Befestigung des Stators 18 am Koppelstück 29 werden die beiden Statorringe 18', 18" an der Rotationsachse 8 koaxial und mit den Klauen 40, 43 aufeinander zugerichtet derart angeordnet, dass in Umfangsrichtung um die Rotationsachse 8 gesehen die ersten Klauen 40 am ersten Statorring 18' in die zweiten Klauenlücken 42 des zweiten Statorringes 18" zeigen, und entsprechend die zweiten Klauen 43 am zweiten Statorring 18" in die ersten Klauenlücken 39 des ersten Statorrings 18' zeigen. Zwischen den beiden Statorringen 18', 18" wird ebenfalls koaxial zur Rotationsachse 8 das Koppelstück 29 derart angeordnet, dass die Zapfen 31 auf den Stirnseiten 30 in Umfangsrichtung um die Rotationsachse 8 gesehen zu den den Gabelelementen 44 des jeweiligen Statorrings 18', 18" ausgerichtet sind, der der jeweiligen Stirnseite 30 axial gegenüberliegt. Dieser Zustand ist in Fig. 3a dargestellt.

Nun werden die beiden Statorringe 18', 18" derart aufeinander zu bewegt, dass die Klauen 40, 43 in das rohrförmige Koppelstück 29 axial eingreifen. Dabei werden die Gabelelemente 44 axial über die Zapfen 31 geschoben, bis die Statorringe 18', 18" auf der jeweiligen Stirnseite 30 des Koppelstückes 29 aufsetzen. Dieser Zustand ist in Fig. 3b dargestellt.

Abschließend werden die einzelnen Zapfen 31 heiß verstemmt. Hierzu werden die Zapfen 31 an ihrem axialen, von der jeweiligen Stirnseite 30 abragenden Ende erhitzt, so dass das Material an dieser Stelle erweicht. Das erweichte Material wird nun gegen die Statorringe 18', 18" gedrückt, so dass es zur Rotationsachse 8 betrachtet axial verteilt wird. Auf diese Weise zwischen den heiß verstemmten Zapfen 31 und den Gabelelementen 44 Formschlüsse geschaffen, die in axialer Richtung wirken und die Statorringe 18', 18" fest am Koppelstück 29 halten.

Zur Befestigung der ersten Lenkwelle 7 oder der zweiten Lenkwelle 11 am Koppelstück 29 weist dieses ein Anbindeelement in Form eines Halteringes 46 auf, in den die entsprechende Lenkwelle 7, 11 axial eingeführt werden kann. Dieser Haltering 46 kann mit der Lenkwelle 7, 11 per Presspassung verbunden werden.

Der Haltering 46 ist an einer der Stirnseiten 30 des Koppelstückes 29 über eine Vielzahl sich axial von der Stirnseite 30 weg erstreckenden Säulen 48 gehalten. Von diesen Säulen 48 ist in Fig. 3a bis 3c nur ein Teil mit einem eigenen Bezugszeichen versehen. Diese Säulen 48 sind in radialen Aussparungen 49 aufgenommen, welche sich ausgehend von den Klauen 40, 43 gesehen radial nach außen in den jeweiligen Statorring 18', 18" erstrecken. Von diesen radialen Aussparungen sind in den Figuren der Übersichtlichkeit halber nicht alle mit einem eigenen Bezugszeichen versehen.

Die Säulen 48 sind derart angeordnet, dass sie sich in Umfangsrichtung um die Rotationsachse 8 gesehen beim zuvor beschriebenen Zusammensetzen immer zwischen eine Klaue 40 des Statorrings 18', der auf der Stirnseite 30 mit den Säulen 48 aufliegt, und ein Gabelelement 44 einsetzen lassen. Um hier eine optimale Stabilität zu gewährleisten, unabhängig davon, in welche Richtung die Lenkwellen 7, 11 im Betrieb des Drehmomentsensors 9 gedreht werden, weisen die einzelnen Säulen 48 die selbe axiale Querschnittsform auf. Daher ist auch ein Umgangsrichtungsabstand 50 zwischen den zuvor genannten Klauen 40 und den Gabelelementen 44 konstant, so dass die Gabelelemente 44 alle in Umfangsrichtung gesehen mittig in den radialen Aussparungen liegen. Die einzelnen Umfangsrichtungsabstände 50 sind in den Figuren der Übersichtlichkeit halber nicht alle mit einem eigenen Bezugszeichen versehen.

Zur Verstärkung der mechanischen Festigkeit sind die Säulen 48 im Bereich der Gabelelemente 44 mit Brückenelementen 52 verbunden, die einstückig mit dem Haltering 46 ausgebildet sind. Auch von diesen Brückenelementen 52 sind in den Figuren der Übersichtlichkeit halber nicht alle mit einem eigenen Bezugszeichen versehen.

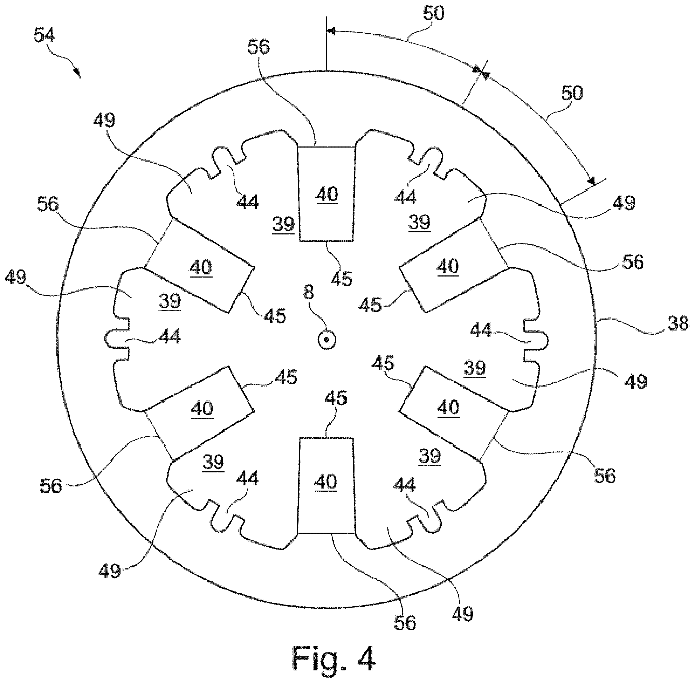

Abschließend soll die Herstellung der Statorringe 18', 18" anhand des ersten Statorrings 18' und der Fig. 4 näher erläutert werden.

Zunächst wird der erste Statorring 18' als Stanzteil 54 aus einem Blech geschnitten. Das Stanzteil 54 besitzt bereits die Grundform des ersten Statorrings 18', allerdings sind im Stanzteil 54 die ersten Klauen 40 allerdings radial nach innen gerichtet.

Nach dem Stanzen werden die ersten Klauen 40 dann axial an einer entsprechenden Biegelinie 56 abgebogen

## Patentansprüche

1. Stator (18) zum Führen eines in einer Umgangsrichtung um eine Rotationsachse (8) ortsabhängigen Magnetfeldes, umfassend:
- einen um die Rotationsachse (8) umlaufenden ersten Statorring (18'), und
- einen um die Rotationsachse (8) umlaufenden zweiten Statorring (18"), der konzentrisch zum ersten Statorring (18') angeordnet ist,
- wobei der erste und zweite Statorring (18', 18") entsprechend in einer ersten axialen Ebene und in einer von der ersten axialen Ebene beabstandeten zweiten axialen Ebene liegend angeordnet und um die Rotationsachse (8) umlaufend ausgebildet sind, und
- wobei vom ersten Statorring (18') umfänglich um die Rotationsachse (8) angeordnete und mit ersten Klauenlücken (39) voneinander beabstandete erste Klauen (40) axial in Richtung des zweiten Statorrings (18") abragen, die in zweite Klauenlücken (42) zwischen zweiten Klauen (43) eingreifen, welche vom zweiten Statorring (18") umfänglich um die Rotationsachse (8) angeordnet und mit den zweiten Klauenlücken (42) voneinander beabstandet axial in Richtung des ersten Statorrings (18') abragen,
- wobei jede der ersten und zweiten Klauen (40, 43) auf ihrer dem Statorring (18', 18") axial gegenüberliegenden Seite einen Klauenkopf (45) umfasst,
- wobei in wenigstens einer der ersten Klauenlücken (39) und in einer der zweiten Klauenlücken (42) gegenüberliegend zum entsprechenden in die jeweilige erste und zweite Klauenlücke (39, 42) eingreifenden Klauenkopf (45) ein Statorbefestigungselement (44) zum Befestigen des ersten und zweiten Statorrings (18', 18") an einem Träger (29) angeordnet ist, und
- wobei das Statorbefestigungselement (44) ein in Umfangsrichtung wirkendes Statorformschlusselement (44) ist, in das axial ein am Träger (29) angeordnetes Tägerformschlusselement (31) eingreifen kann,
**dadurch gekennzeichnet, dass**
das Statorformschlusselement (44) eine radial zur Rotationsachse (8) hin gerichtete Gabel ist.

2. Stator (18) nach einem der vorstehenden Ansprüchen, wobei das Statorformschlusselement (44) einstückig mit dem jeweiligen Statorring (18' 18") ausgebildet ist.

3. Stator (18) nach einem der vorstehenden Ansprüche, wobei das Statorbefestigungselement (44) in einer radialen Aussparung zwischen zwei benachbarten Klauen angeordnet ist.

4. Stator (18) nach Anspruch 3, wobei das Statorbefestigungselement (44) in der radialen Aussparung (49) zwischen den zwei benachbarten Klauen (40, 43) mittig angeordnet ist.

5. Stator (18) nach einem der vorstehenden Ansprüche, wobei jeder Statorring (18', 18") ein Stanzteil (54) ist, an dem die Klauen (40, 43) axial abgebogen sind.

6. Sensor (9) zur Erfassung eines Drehmoments (13) zwischen einer ersten Welle (7) und einer zweiten Welle (11), die über einen Torsionsstab (10) miteinander verbundenen sind, umfassend:
- einen zylinderförmigen Träger (29) mit zwei gegenüberliegenden Stirnseiten (30), auf denen je Trägerbefestigungselement (31) angeordnet ist,
- einen mit der ersten Welle (7) ortsfest verbindbaren Stator (18) nach einem der vorstehenden Ansprüche, dessen Statorringe (18', 18") auf die Stirnseiten (30) des Trägers (29) aufgesetzt und über die entsprechenden Trägerbefestigungselemente (31) und Statorbefestigungselemente (44) am Träger (29) befestigt sind,
- einen mit der zweiten Welle (11) ortsfest verbindbaren und koaxial zur Rotationsachse (8) angeordneten Magnetfeldgeber (16) zum Erzeugen und Einspeisen des Magnetfeldes (17) in den Stator (18), und
- einen Magnetfeldfühler (21) zum Erfassen eines den Stator (18) passierenden Magnetfeldes (20) aus dem Magnetfeldgeber (16).

7. Sensor (9) nach Anspruch 6, wobei die Trägerbefestigungselemente (31) Zapfen sind, die mit den Statorbefestigungselementen (44) heißverstemmt sind.

8. Sensor (9) nach Anspruch 6 oder 7, wobei auf eine der Stirnseiten (30) des Trägers Verbindungssäulen (48) aufgesetzt sind, die auf dem Träger (29) ein Anbindeelement (46) für die erste Welle (7) tragen.

## Claims

1. Stator (18) to guide a location-dependent magnetic field around a rotation axis (8) in a circumferential direction, comprising:
- a first stator ring (18') rotating around the rotation axis (8), and
- a second stator ring (18"), being disposed concentrically with the first stator ring (18'), rotating around the rotation axis (8),
- wherein the first and second stator ring (18', 18") are arranged respectively on a first axial plane and on a second axial plane, the latter at a distance to the first axial plane, and executed circumferentially around the rotation axis (8), and
- wherein first claws (40) projecting axially from the first stator ring (18') in the direction of the second stator ring (18") being arranged circumferentially around the rotation axis (8) and at a distance with the first claw gaps (39) engaging in second claw gaps (42) between second claws (43) which are arranged circumferentially around the rotation axis (8) from the second stator ring (18"), and protruding axially in the direction of the first stator ring (18') at a distance to the second claw gaps (42),
- wherein each of the first and second claws (40, 43) comprises a claw head (45) on the side axially opposing the stator ring (18', 18"),
- wherein in at least one of the first claw gaps (39) and in one of the second claw gaps (42) relative to the corresponding claw head (45) engaging in the respective first and second claw gap (39, 42), a stator fastening element (44) is arranged on a carrier (29) for fastening the first and second stator ring (18', 18"),
- wherein the stator fastening element (44) is an in circumferential direction acting stator interlocking element (44), in which a carrier interlocking element (31) arranged on the carrier (29) may engage axially,
**characterized in that**
- the stator interlocking element (44) is a yoke radially pointing to the rotation axis (8).

2. Stator (18) as claimed in one of the preceding claims, wherein the stator interlocking element (44) can be executed as one piece with the respective stator ring (18' 18").

3. Stator (18) as claimed in one of the preceding claims, wherein the stator fastening element (44) is arranged in a radial gap between two adjacent claws.

4. Stator (18) as claimed in claim 3, wherein the stator fastening element (44) is arranged in the centre of the radial gap (49) between the two adjacent claws (40, 43).

5. Stator (18) as claimed in one of the preceding claims, wherein each stator ring (18', 18") is a punched part (54) with the claws (40, 43) being bent axially.

6. Sensor (9) to record a torque (13) between a first shaft (7) and a second shaft (11) being connected via a torsion bar (10), comprising:
- a cylindrical carrier (29) with two opposing front sides (30), on which a carrier fastening element (31) is arranged respectively,
- a stator (18) which can be fixed to the first shaft (7) as claimed in one of the preceding claims, whose stator rings (18', 18") are positioned on the front sides (30) of the carrier (29) and attached to the carrier (29) via the respective carrier fastening elements (31) and stator fastening elements (44),
- a magnetic field transducer (16) which can be fixed to the second shaft (11), and which is arranged co-axially to the rotation axis (8) to generate and feed the magnetic field (17) into the stator (18), and
- a magnetic field sensor (21) to record a magnetic field (20) from the magnetic field transducer (16) passing the stator (18)

7. Sensor (9) as claimed in claim 6, wherein the carrier fastening elements (31) are spigots which are stalked with the stator fastening elements (44).

8. Sensor (9) as claimed in claim 6 or 7, wherein connecting columns (48) are positioned on one of the front sides (30) of the carrier (29) which carry an attachment element (46) on the carrier (29) for the first shaft (7).

## Revendications

1. Stator (18) pour guider un champ magnétique dépendant de la position dans une direction circonférentielle autour d'un axe de rotation (8), comprenant:
- un premier anneau de stator (18') agencé autour de l'axe de rotation (8), et
- un deuxième anneau de stator (18") agencé autour de l'axe de rotation (8) et disposé concentriquement par rapport au premier anneau de stator (18'),
- dans lequel les premier et deuxième anneaux de stator (18', 18") sont disposés respectivement dans un premier plan axial et dans un deuxième plan axial espacé du premier plan axial, et sont conçus pour faire le tour de l'axe de rotation (8), et
- dans lequel des premières griffes (40) réparties circonférentiellement autour de l'axe de rotation (8) et espacées les unes des autres par des premiers interstices de griffes (39) font saillie du premier anneau de stator (18') axialement en direction du deuxième anneau de stator (18") et s'engagent dans des deuxièmes interstices de griffes (42) entre des deuxièmes griffes (43) qui sont espacées les unes des autres par les deuxièmes interstices de griffes (42) et qui font saillie du deuxième anneau de stator (18") axialement en direction du premier anneau de stator (18') et sont réparties circonférentiellement autour de l'axe de rotation (8),
- dans lequel chacune des première et deuxième griffes (40, 43) comporte une tête de griffe (45) sur son côté axialement opposé à l'anneau de stator (18', 18"),
- dans lequel un élément de fixation de stator (44) pour la fixation des premier et deuxième anneaux de stator (18', 18") sur un support (29) est disposé dans au moins l'un des premiers interstices de griffes (39) et dans au moins l'un des deuxièmes interstices de griffes (42) en opposition avec la tête de griffe correspondante (45) s'engageant dans les premiers et deuxièmes interstices de griffes respectifs (39, 42), et
- dans lequel l'élément de fixation de stator (44) est un élément de verrouillage en forme de stator (44) agissant dans la direction circonférentielle, dans lequel un élément de fermeture en forme de poutre (31) disposé sur le support (29) peut s'engager axialement,
**caractérisé en ce que**
- l'élément de verrouillage en forme de stator (44) est une fourchette dirigée radialement par rapport à l'axe de rotation (8).

2. Stator (18) selon l'une quelconque des revendications précédentes, dans lequel l'élément de verrouillage en forme de stator (44) est formé d'une seule pièce avec l'anneau de stator correspondant (18', 18").

3. Stator (18) selon l'une quelconque des revendications précédentes, dans lequel l'élément de fixation de stator (44) est disposé dans un espace radial entre deux griffes adjacentes.

4. Stator (18) selon la revendication 3, dans lequel l'élément de fixation de stator (44) est disposé au centre dans l'espace radial (49) entre les deux griffes adjacentes (40, 43).

5. Stator (18) selon l'une quelconque des revendications précédentes, dans lequel chaque anneau de stator (18', 18") est une pièce emboutie (54) dans laquelle les griffes (40, 43) sont repliées axialement.

6. Capteur (9) pour enregistrer un couple (13) entre un premier arbre (7) et un second arbre (11) qui sont reliés l'un à l'autre par une barre de torsion (10), comprenant:
- un support (29) en forme de cylindre avec deux côtés frontaux (30) opposés l'un à l'autre et sur lequel est prévu un élément de fixation de support (31),
- un stator (18) relié de façon fixe avec le premier arbre (7) et conforme à l'une quelconque des revendications précédentes, dont les anneaux de stator (18', 18") sont positionnés sur les côtés frontaux (30) du support (29) et sont fixés au support par l'intermédiaire des éléments de fixation de support (31) et des éléments de fixation de stator (44) respectifs,
- un transducteur de champ magnétique (16) relié de façon fixe au second arbre (11) et coaxial avec l'axe de rotation (8) pour générer et fournir le champ magnétique (17) dans le stator (18), et
- un capteur de champ magnétique (21) pour enregistrer un champ magnétique (20) provenant du transducteur de champ magnétique (16) et traversant le stator (18).

7. Capteur (9) selon la revendication 6, dans lequel les éléments de fixation de support (31) sont des tourillons qui sont insérés à chaud dans l'élément de fixation de stator (44).

8. Capteur (9) selon la revendication 6 ou la revendication 7, dans lequel des colonnes de liaison (48) sont positionnées sur l'un des côtés frontaux (30) du support, et portent sur le support (29) un élément de liaison (46) pour le premier arbre (7).
